# EUROPÄISCHE PATENTSCHRIFT

(11) **EP 2 999 616 B1**
(45) Veröffentlichungstag und Bekanntmachung des Hinweises auf die Patenterteilung: **11.10.2017**
(21) Anmeldenummer: 14716849.6
(22) Anmeldetag: 11.04.2014
(51) Int. Cl.: B62D 21/11, B62D 29/04

(54) **ACHSTRÄGER EINES FAHRZEUGS**
AXLE SUPPORT OF A VEHICLE
SUPPORT D'ESSIEU D'UN VÉHICULE

(30) Priorität: 22.05.2013 DE 102013209375
(43) Veröffentlichungstag der Anmeldung: 30.03.2016
(73) Patentinhaber: Bayerische Motoren Werke Aktiengesellschaft, 80809 München (DE)
(72) Erfinder: KELLER, David, 80638 München (DE)
(86) Internationale Anmeldenummer: PCT/EP2014/057443
(87) Internationale Veröffentlichungsnummer: WO 2014/187614

(56) Entgegenhaltungen:
- EP-A1- 2 360 082
- EP-A2- 2 527 231
- DE-A1-102010 053 960
- US-A1- 2003 175 455

## Beschreibung

Die Erfindung betrifft einen Achsträger eines Fahrzeugs, insbesondere eines Personenkraftwagens, mit zumindest einem Längsträger, der aus einem Faserverbundkunststoff gebildet ist, nach dem Oberbegriff des Anspruchs 1. Zum Stand der Technik wird neben der DE 10 2012 011 797 A1 und der EP 2 527 231 A2 auf die EP 2 360 082 A1 verwiesen.

Achsträger, bspw. Vorderachsträger von Personenkraftwagen bestehen heute aus metallischen Werkstoffen, wie Aluminium oder Stahl. Integrale Bestandteile eines solchen Achsträgers sind üblicherweise zwei Längsträger und ein oder mehrere Querträger, die die beiden Längsträger miteinander verbinden. Die Längsträger sind oftmals als IHU-Profile (= durch Innenhochdruckumformung hergestellte Profile) ausgebildet. An den Längsträgern und/oder Querträgern sind Aufnahmevorrichtungen, beispielsweise für Lenker, Lenkgetriebe oder Motorlagerungen vorgesehen. Zur Befestigung am Fahrzeug werden die insbesondere die Längsträger von unten an Karosserielängsträger bzw. sog. Motorträger montiert.

Nachteilig an bekannten Längsträgern in Achsträgern ist das durch den metallischen Werkstoff hervorgerufene (relativ) hohe Gewicht. Ferner spielen insbesondere die Längsträger eines Achsträgers im Hinblick auf das Crash-verhalten des Fahrzeugs eine nicht vernachlässigbare Rolle, wobei heutige Achsträger mit metallischen Längsträgern verbesserungsfähig erscheinen, dahingehend, dass die bei einem Zusammenstoß in die Fahrzeug-Struktur eingebrachte Energie noch weiter verstärkt durch eine Verformung der Längsträger des Achsträgers abgebaut werden könnte. Auch besteht im Stand der Technik ein Zielkonflikt zwischen einem eigentlich gewünschten Crash-Verhalten des Fahrzeugs und dessen fahrdynamischen und akustischen Verhalten. Während nämlich der Achsträger für den Crashfall eine möglichst nachgiebige Struktur aufweisen sollte, ist für eine gute Fahrdynamik und Akustik ein möglichst steifer Achsträger von Vorteil.

Ausgehend von diesem Stand der Technik ist es Aufgabe der Erfindung, eine Maßnahme zur Gewichtsminderung an einem Fahrzeug-Achsträger aufzuzeigen, die diesem bei Erfüllung der fahrdynamischen Anforderungen auch ein gutes Crashverhalten verleiht.

Die Lösung dieser Aufgabe ergibt sich mit den Merkmalen des Anspruchs 1. Vorteilhafte Aus- und Weiterbildungen sind Inhalt der Unteransprüche.

Bei einem erfindungsgemäßen Achsträger ist ein Längsträger zumindest über wesentliche Abschnitte aus einem Faserverbundkunststoff gebildet. Faserverbundkunststoffe sind Werkstoffe, die mindestens ein Fasermaterial und einen Matrixwerkstoff enthalten. Die entsprechenden Materialien werden den hohen Anforderungen bezüglich Steifigkeit und Festigkeit entsprechend ausgewählt und umfassen insbesondere CFK (Kohlenstofffaserverbundkunststoffe) und GFK (Glasfaserverbundkunststoffe). Ein erfindungsgemäß vorgesehener Längsträger zeichnet sich aufgrund der Faserverbundkunststoffstruktur durch eine hohe Stabilität bei gleichzeitig, gegenüber herkömmlichen metallischen Werkstoffen, reduziertem Gewicht aus. Zudem wird durch den Faserverbundkunststoff ein günstiges Crash-Verhalten in das Bauteil eingetragen, da die Faserverbundstruktur mehr Energie als ein entsprechender metallischer Werkstoff aufnehmen kann. Somit ist der erfindungsgemäße Längsträger durch eine hohe Steifigkeit und Festigkeit und dennoch sehr hohe Energieaufnahmekapazität gekennzeichnet, wodurch ein ausgewogenes Eigenschaftsprofil des Längsträgers im Hinblick auf die mechanischen Eigenschaften, die Fahrdynamik, Akustik und das Crash-Verhalten des diesen Längsträger enthaltenden Achsträgers erzielt wird.

Es kann - wie bei den o.g. IHU-Profilen üblich - der Längsträger bzw. dessen Flechtprofil zumindest abschnittsweise als ein Hohlprofil ausgebildet sein, was das Gewicht weiter reduziert, das Crash-Verhalten verbessert und eine einfache Verbindung mit anderen Bauteilen ermöglicht. Das Hohlprofil enthält vorzugsweise Flechtlagen, d.h. es ist als Flechtprofil ausgebildet, derart dass die Verstärkungsfasern des Faserverbundkunststoffes zu zumindest einer Flechtschicht, ggf. auch mehreren übereiander vorgesehenen Flechtschichten, geflochten sind (und somit quasi einen Flechtschlauch bilden). Durch die Form des Flechtprofils kann ein guter Kompromiss zwischen hoher gestalterischer Freiheit eines erfindungsgemäßen Achsträger-Längsträgers auf der einen Seite und sehr guten mechanischen Eigenschaften auf der anderen Seite erzielt werden. Aufgrund der relativ hohen Dichte eines Geflechts im Vergleich zu beispielsweise Gewirken oder Gestricken kann der Längsträger mit hoher Festigkeit und Steifigkeit dargestellt werden, die sich auch vorteilhaft auf die Akustik und Fahrdynamik auswirkt, wobei jedoch durch die Flechtstruktur zudem eine ausreichend hohe Verformbarkeit im Crashfall bereitgestellt wird. Günstig ist ein mehrfaches Überflechten eines Flechtprofils sein, womit sich ein aus mehreren Flechtschichten aufgebautes Flechtprofil ergibt, da auf diese Weise das Crashverhalten effektiver dezentralisiert und eine hohe Energieaufnahme über weitere Bereiche des Längsträgers möglich wird.

Es kann das Flechtprofil, welches auch als Flechtschlauch bezeichnet werden kann, über der Länge (des Längsträgers) betrachtet bereichsweise unterschiedliche Wandstärken aufweisen, d.h. die Flechtschicht oder Flechtschichten können über der Länge des Längsträgers unterschiedlich ausgeführt sein. Dies kann beispielsweise dadurch erzeugt werden, dass die Flechtrichtung mehrmals gewendet wird und damit ein üblicherweise zur Herstellung eines Flechtschlauchs verwendeter Flechtkern an einigen Stellen mehrfach überflochten wird. Eine andere Ausführungsform für eine über der Länge unterschiedliche Ausführung der Flechtschichten besteht in einer unterschiedlichen Ausrichtung der die Flechtschicht(en) bildenden Verstärkungsfäden (bspw. Kohlenstoff- oder Glasfaser-Fäden). Diese Flechtfäden können eine dem Profilverlauf des Längsträgers und/oder der jeweiligen örtlichen Belastungsrichtung angepasste Richtung aufweisen. Diese Richtung oder Ausrichtung der Flechtfäden kann entlang des Trägers veränderlich sein, was bspw. durch eine unterschiedliche Flechtgeschwindigkeit bzw. Vorschubgeschwindigkeit beim Flechten der Verstärkungsfäden dargestellt werden kann.

Wie bereits kurz erwähnt wird üblicherweise zur Herstellung eines Flechtprofils ein Flechtkern benötigt, auf welchem der Flechtprozess der Verstärkungsfasern erfolgt. Üblich ist es dabei, bei der Herstellung eines Flechtprofils das Geflecht auf einem Flechtkern zu errichten, der nach Fertigstellung des Geflechts entfernt, beispielsweise aufgelöst, wird. Nach einer Weiterbildung der vorliegenden Erfindung kann der Flechtkern zumindest abschnittsweise innerhalb des Flechtprofils verbleibend vorgesehen sein, d.h. das im Achsträger enthaltene Flechtprofil enthält seinerseits bereichsweise einen bzw. den Flechtkern. Mit einem zumindest stellenweise im Flechtprofil verbliebenen Flechtkern kann sich eine verbesserte akustische Dämpfung des Längsträgers ergeben und dessen Verformungsverhalten (insbesondere im Crashfall) gezielt eingestellt werden. Der Flechtkern kann aus einem beliebigen geeigneten Material bestehen; besonders geeignet hierfür sind Schaumwerkstoffe.

Während sich mit einem Entfernen des Flechtkerns eine weitere Gewichtsersparnis ergibt, kann ein im Flechtprofil oder Flechtschlauch verbliebener Flechtkern insbesondere eine akustisch positive Wirkung zeigen, weshalb der Flechtkern auch nur in gewissen akustisch kritischen Bereichen im Flechtprofil verbleiben kann. Als Fertigungsverfahren für ein teilweises bzw. abschnittsweises Entfernen des Flechtkerns kommen bspw. das Ausblasen mit einem Strahlgut oder das Lösen mit einem Lösungsmittel in Betracht. Weiterhin kann der Flechtkern selbst (zusätzliche) Einlegeteile bspw. aus Kunststoffen oder Metallen bestehend aufnehmen. Diese Einlegeteile (selbstverständlich ist auch nur ein einziges Einlegeteil möglich) werden beim Herstellen des Flechtprofils mit umflochten und bilden nach dem Aushärten des Kunststoffmaterials eine Einheit mit dem Längsträger des Achsträgers. Solche Einlegeteile können Verschraubungspunkte oder Versteifungen im Profil bilden, so bspw. die nötigen Verbindungspunkte zwischen dem Achsträger und dem Fahrzeug-Aufbau, bspw. dem eingangs genannten sog. Motorträger. Auch können durch solche Einlegeteile ("Einleger") innerhalb des Flechtprofils oder Längsträgers sog. Schotte bzw. Schottwände ausgebildet werden, die in Bereichen bspw. der Anbindung von radführenden Lenkern den Profilquerschnitt des Längsträgers stützen.

Das Flechtprofil kann textile Verstärkungen aufweisen. Solche textilen Verstärkungen werden beispielsweise durch das Anbringen von Zusatznähten, Tuften oder Verweben des Werkstoffes, erhalten. Hierdurch kann im Crashfall die einwirkende Energie auf den gesamten Längsträger ausgeweitet werden, wodurch starke lokale Beschädigungen reduzierbar sind. Weiterhin kann der Faserverbundkunststoff des zumindest einen erfindungsgemäßen Längsträgers mindestens eine Dämpfungsschicht, vorzugsweise aus einem visco-elastischen Material, umfassen. Das Vorsehen einer solchen Dämpfungsschicht verbessert das akustische Verhalten des Längsträgers, insbesondere dadurch, dass die Dämpfung somit direkt in die Längsträgerstruktur integriert wird. Folglich kann auf weitere dieser Funktion dienende externe Bauteile verzichtet werden, wodurch die bauliche Struktur des Achsträgers bzw. der zugeordneten Fahrzeugachse vereinfacht wird.

Die besagte Dämpfungsschicht ist idealerweise zwischen auf- oder übereinander vorgesehenen Flechtlagen eingebracht, kann aber auch zwischen einer Flechtlage und dem Flechtkern oder auf die Außenseite des Geflechts (von Verstärkungsfäden) aufgebracht sein. Aus Gewichts- und Kostengründen kann es empfehlenswert sein, die Dämpfungsschicht nicht über der gesamten Länge des Flechtprofils (des. Längsträgers) vorzusehen, sondern als lokale Patches (= Flicken) nur in schwingungskritischeren Bereichen. Die bauteilinterne Schwingungs-Dämpfung basiert auf der inneren Reibung in der besagten Dämpfungsschicht. Diese wird idealerweise so genutzt, dass die Dämpfungsschicht durch Scherkräfte zwischen den angrenzenden Flechtlagen beansprucht wird. Folglich können für die zu bedämpfenden Schwingungsmoden diejenigen Stellen mit hoher Scherspannung ermittelt werden es kann dann die vorgeschlagene Dämpfungsmaßnahme lokal dort eingesetzt werden.

An einem erfindungsgemäßen Achsträgers können weitere aus einem Faserverbundkunststoff bestehende Bauelemente vorgesehen sein, so neben zumindest einem in Anspruch 1 genannten Querträger auch ein Schubfeld oder irgendwie geartete Aufnahmevorrichtungen zur Befestigung weiterer Bauteile. Neben einer nochmaligen Gewichtsreduktion vereinfachen solche Bauelemente aufgrund ihres Materials das Verbinden mit dem Achsträger und es wird damit einer Kontaktkorrosion vorgebeugt. Was den genannten oder ggf. mehrere Querträger betrifft, so ist dieser bzw. können diese über Knotenelemente, welche in Spritzgusstechnik ausgeführt sind oder durch ein SMC (sheet molding compound) gebildet sind, durch Klebeverbindung mit den Längsträgern verbunden. Durch die hier dargestellten Verbindungstypen können die Längsträger und die Querträger stabil aneinander befestigt werden. Die Bauteile werden integraler Bestandteil des Achsträgers, wodurch die Energieaufnahme im Crashfall dezentralisiert und starken lokalen Beschädigungen vorgebeugt wird. Zudem kann auf zusätzliche Verbindungselemente, wie beispielsweise Nieten, Schrauben und dergleichen, verzichtet werden, was die Herstellung des Achsträgers vereinfacht.

In diesem Zusammenhang sei darauf hingewiesen, dass es aufgrund des Flechtens möglich ist, nahezu beliebige Formen darzustellen. Insbesondere kann ein Längsträger eines erfindungsgemäßen Achsträgers auch eine Verzweigung aufweisen, d.h. mit einer Verzweigung geflochten sein. Eine solche Verzweigung ist bspw. möglich, um (alternativ zum o.g. Knotenelement) einen Anschlussstumpf für einen Querträger oder eine anderweitige Querverbindung zwischen den (üblicherweise) beiden Längsträgern eines erfindungsgemäßen Achsträgers darzustellen.

Im weiteren seien nochmals Vorteile aufgelistet, die sich mit einem erfindungsgemäßen Achsträger bzw. dessen soweit beschriebenen Weiterbildungen einstellen können: Die mechanischen Eigenschaften des Längsträgers bzw. des Achsträgers, wie insbesondere statische und dynamische Steifigkeit, werden verbessert. Die Festigkeit des Längsträgers bzw. des Achsträgers ist erhöht. Das Crash-Verhalten des Längsträgers bzw. des Achsträgers wird durch die materialoptimierte Faserverbundbauweise verbessert. Lokal einwirkende Verformungsenergien werden dezentralisiert und abgeleitet, so dass eine lokale Deformation oder Zerstörung vermieden wird. Fahrdynamik und Akustik des Längsträgers bzw. des Achsträgers werden verbessert. Das Gewicht des erfindungsgemäßen Längsträgers bzw. des erfindungsgemäßen Achsträgers ist bei gleichen bzw. besseren funktionalen Eigenschaften geringer als bei der herkömmlichen Bauweise aus Stahl oder Aluminium. Eine Integration und Befestigung von weiteren Bauteilen wie Querträgern, Querlenkern und/oder Aufnahmevorkehrungen für weitere Bauteile und/oder ein Schubfeld werden vereinfacht. Kontaktkorrosionen werden reduziert.

Weitere Einzelheiten, Merkmale und Vorteile der Erfindung ergeben sich aus der nachfolgenden Beschreibung der beigefügten Figuren. Im wesentlichen in Prinzipdarstellung zeigt
- Figur 1: eine Draufsicht auf einen Teil eines Achsträgers gemäß einer ersten Ausführungsform,
- Figur 2: eine Schnittansicht eines Achsträgers in einem Verbindungsbereich gemäß einer zweiten Ausführungsform, und
- Figur 3: eine räumliche Darstellung eines Verbindungsbereichs an einem erfindungsgemäßen Achsträgers gemäß einer dritten Ausführungsform.

In den Figuren sind nur die hier interessierenden Teile und Komponenten dargestellt, alle übrigen Elemente, beispielsweise des Achsträgers, sind der Übersichtlichkeit halber weggelassen. In sämtlichen Figuren beziffern gleiche Bezugszeichen gleiche Bauteile.

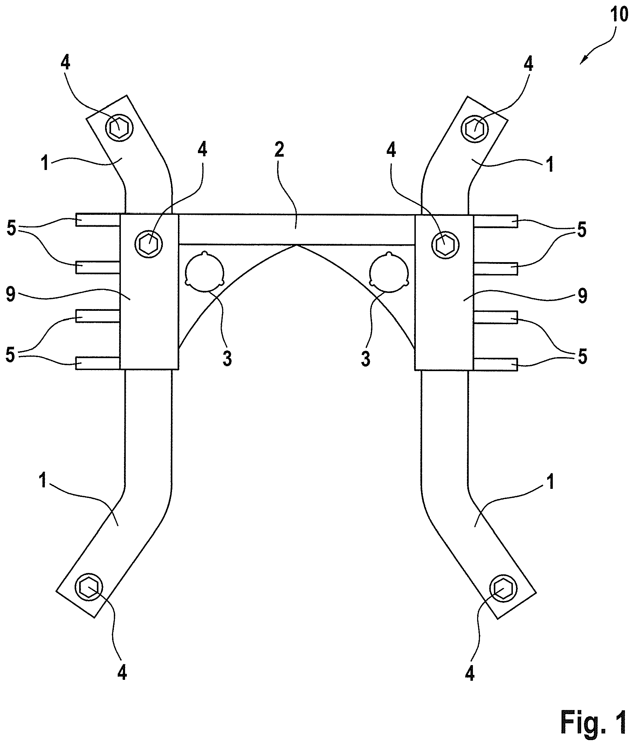

Im Detail zeigt Figur 1 einen Achsträger 10, der zwei Längsträger 1 und einen die beiden Längsträger 1 verbindenden Querträger 2, der in Form einer Querbrücke mit zwei Motorlagern 3 ausgebildet ist, aufweist. Die Längsträger 1 sind aus einem Faserverbundkunststoff, vorzugsweise aus GFK oder CFK, zumindest abschnittsweise, vorzugsweise vollständig als Flechtprofil ausgebildet und verfügen damit über ein geringes Eigengewicht bei sehr guter Stabilität. Die Längsträger 1 enthalten je drei Verschraubungen 4, mit Hilfe derer der Achsträger 10 beispielsweise an einer Fahrzeugkarosserie befestigbar ist. Zudem weisen die Längsträger 1 Lenkeranbindungen 5 auf. Hieran können Querlenker für die Radaufhängung befestigt werden.

Die Längsträger 1 und der Querträger 2 sind über ein Knotenelement 9, beispielsweise über ein SMC-Knotenelement (sheet-molding-compound), miteinander verbunden und somit ineinander integriert. Zusätzliche Befestigungsmittel oder Verbindungselemente sind daher nicht notwendig. Eine Verbindung des Längsträgers 1, des Querträgers 2 und des Knotenelements 9 kann beispielsweise durch Verkleben oder Verschrauben erfolgen. Die Verbindung ist dabei so ausgebildet, dass kein Setzverhalten der Bauteile auftritt.

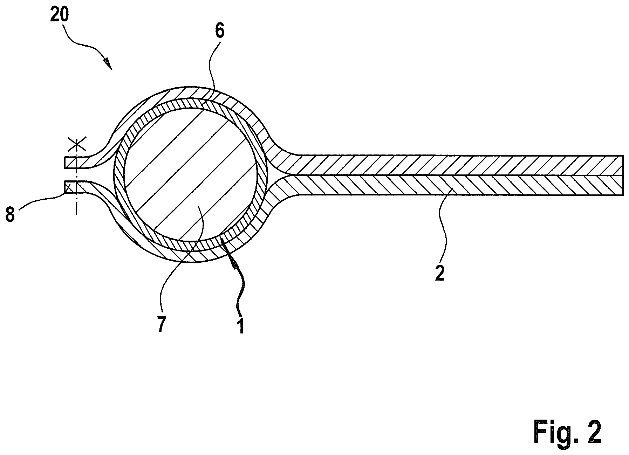

Figur 2 zeigt eine Schnittansicht eines Teils eines Achsträgers 20 gemäß einer zweiten Ausführungsform. Zu erkennen ist, dass der nur in einem Querschnitt dargestellte Längsträger 1 aus einem Flechtschlauch bzw. Flechtprofil 6 besteht, innerhalb dessen ein Flechtkern 7 noch enthalten ist. Durch den Flechtkern 7 wird die akustische Dämpfung des Achsträgers 20 verstärkt und die Verformungseigenschaft des Achsträgers 20 angepasst.

Auch diese Darstellung gemäß Figur 2 zeigt eine mögliche Verbindung zwischen dem Längsträger 1 und einem Querträger 2. Die Form und Ausbildung des Querträgers 2 ist im Einzelnen nicht beschränkt. Um eine besonders gute Stabilität bereitzustellen, kann hier der Querträger 2 bspw. aus zwei quasi parallel oder spiegelbildlich zueinander angeordneten metallischen Werkstücken bestehen, z.B. aus zwei schalenförmigen Blechen, die wie figürlich dargestellt mit ihren Endabschnitten den Längsträger 1 umschließen. Dabei ist wie ersichtlich ein sog. Fügeflansch 8 gebildet und es kann an dieser Stelle eine Klebeverbindung oder Schraubverbindung vorgesehen sein, wobei darauf geachtet ist, dass kein die sichere Verbindung beeinträchtigendes Setzverhalten der Bauteile auftritt.

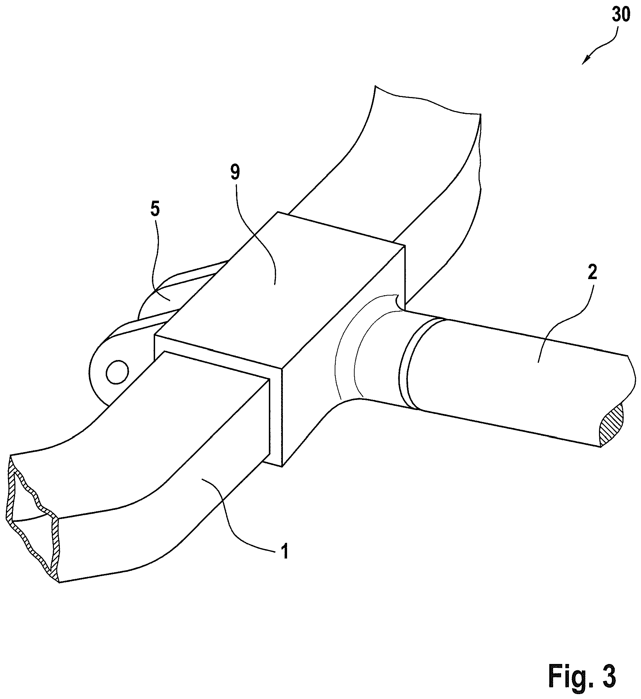

Figur 3 zeigt eine andere Ausgestaltung einer Verbindungsstelle eines Längsträgers 1 mit einem Querträger 2 in einem Achsträger 30, der ansonsten - ebenso wie der Achsträger 20 aus Fig.2 ähnlich dem Achsträger 10 in Figur 1 aufgebaut sein kann. In Fig.3 im Detail zu sehen ist, dass der Längsträger 1 mit dem Querträger 2 durch ein Knotenelement 9 ähnlich Fig.1, beispielsweise durch ein SMC-Knotenelement (sheet-molding-compound), miteinander verbunden und die Bauteile somit ineinander integriert sind. Zusätzliche Befestigungsmittel oder Verbindungselemente sind nicht notwendig. Durch die vorzugsweise Ausgestaltung des Knotenelements 9 ebenfalls als Faserverbundbauteil kann eine dauerhafte und einfache Verbindung zwischen den Achsträgerteilen bei sehr geringem Eigengewicht des Achsträgers 30 hergestellt werden.

In dieser Ausführungsform ist der Querträger 2 als Rundprofil ausgebildet und in eine geeignet am Knotenelement 9 vorgesehene Aufnahme hierfür eingesteckt. Prinzipiell sind aber auch andere Formen für den Querträger 2 denkbar. Auch hier weist der Längsträger 1 am Knotenelement 9 eine Lenkeranbindung 5 auf. Hieran können Querlenker für die Radaufhängung befestigt werden.

## Patentansprüche

1. Achsträger eines Fahrzeugs mit zumindest einem Längsträger, der ein aus einem Faserverbundkunststoff gebildetes Flechtprofil mit einer oder mehreren durch die Verstärkungsfäden des Faserverbundkunststoffes gebildeten Flechtschichten aufweist, **gekennzeichnet durch** ein als Spritzgussteil oder in SMC-Technik ausgeführtes Knotenelement (9), welches jeweils über eine Klebeverbindung den Längsträger (1) mit einem Querträger (2) verbindet.

2. Achsträger nach Anspruch 1, wobei das Flechtprofil zumindest abschnittsweise ein Hohlprofil bildet.

3. Achsträger nach Anspruch 1 oder 2, wobei das Flechtprofil (7) des Längsträgers zumindest abschnittsweise einen Flechtkern (8) enthält.

4. Achsträger nach einem der vorangegangenen Ansprüche, wobei das Flechtprofil (7) textile Verstärkungen aufweist.

5. Achsträger nach einem der vorhergehenden Ansprüche, wobei das Flechtprofil zumindest abschnittsweise eine Dämpfungsschicht, beispielsweise aus einem visco-elastischen Material bestehend, aufweist.

6. Achsträger nach einem der vorhergehenden Ansprüche, welcher zumindest ein weiteres aus einem Faserverbundkunststoff gebildetes Bauelement, wie eine Aufnahmevorrichtung für die Befestigung eines weiteren Bauteiles oder ein Schubfeld.

7. Achsträger nach einem der vorhergehenden Ansprüche, wobei die Flechtschicht(en) im Längsträger über dessen Länge betrachtet unterschiedlich ausgeführt ist/sind, derart dass das Flechtprofil eine unterschiedliche Wandstärke besitzt oder die Ausrichtung der Verstärkungsfäden unterschiedlich ist oder dass im Längsträger eine Verzweigung ausgebildet ist.

8. Achsträger nach Anspruch 3 mit zumindest einem im Flechtkern (8) vorgesehen und aus einem anderen Material als der Flechtkern bestehenden Einlegeteil.

9. Achsträger nach einem der vorhergehenden Ansprüche mit einem in Form von lokalen auf oder in das Flechtprofil aufgebrachten oder eingebrachten Flicken, welche als Dämpfungsschicht fungieren.

## Claims

1. An axle support of a vehicle, with at least one longitudinal member, which comprises a braided profile which is formed from a fibre composite plastic and which has one or more braided layers formed by the reinforcement threads of the fibre composite plastic, **characterised by** a node element (9), which is embodied as an injection-moulded part or as a node element produced by SMC technology and which connects the longitudinal member (1) to a cross-member (2) via an adhesive connection.

2. An axle support according to claim 1, wherein the braided profile forms a hollow profile at least in part.

3. An axle support according to claim 1 or 2, wherein the braided profile (7) of the longitudinal member contains a braided core (8) at least in part.

4. An axle support according to any one of the preceding claims, wherein the braided profile (7) has textile reinforcements.

5. An axle support according to any one of the preceding claims, wherein the braided profile has a damping layer, at least in part, for example comprising a viscoelastic material.

6. An axle support according to any one of the preceding claims, which has at least one further component formed from a fibre composite plastic, such as a mounting device for the fastening of a further component or a shear panel.

7. An axle support according to any one of the preceding claims, wherein the braided layer(s) in the longitudinal member is/are formed differently as considered over its/their length, in such a way that the braided profile has a different wall thickness or the orientation of the reinforcement threads is different, or in such a way that a branching is formed in the longitudinal member.

8. An axle support according to claim 3, comprising at least one insert part provided in the braided core (8) and comprising a different material compared to the braided core.

9. An axle support according to any one of the preceding claims, comprising local patches applied to or introduced into the braided profile, which act as a damping layer.

## Revendications

1. Support d'essieu d'un véhicule comprenant au moins un support longitudinal qui comprend un profilé en treillis réalisé en un matériau synthétique composite à base de fibres ayant au moins une couche de treillis formée par les brins de renfort du matériau synthétique composite à base de fibres,
**caractérise par**
un élément de noeud (9) réalisé sous la forme d'une pièce injectée ou réalisée par la technique SMC qui relie respectivement, par l'intermédiaire d'une liaison par collage, le support longitudinal (1) avec un support transversal (2).

2. Support d'essieu conforme à la revendication 1,
selon lequel le profilé en treillis forme au moins par segments un profilé creux.

3. Support d'essieu conforme à la revendication 1 ou 2,
dans lequel le profilé en treillis (7) du support longitudinal renferme au moins par segments un noyau en treillis (8).

4. Support d'essieu conforme à l'une des revendications précédentes, dans lequel le profilé en treillis (7) comprend des renforts textiles.

5. Procédé conforme à l'une des revendications précédentes,
**caractérisé en ce que**
le profilé en treillis comporte, au moins par segments une couche d'amortissement, par exemple réalisée en un matériau viscoélastique.

6. Support d'essieu conforme à l'une des revendications précédentes, comprenant au moins un autre composant réalisé en un matériau synthétique renforcé par des fibres, tels qu'un dispositif de réception permettant la fixation d'un autre composant ou un champ de poussée.

7. Support d'essieu conforme à l'une des revendications précédentes, dans lequel la(les) couche(s) en treillis est(sont) réalisée(s) différemment sur la longueur du support longitudinal, de sorte que le profilé en treillis ait une épaisseur de paroi différente ou que l'orientation des brins de renfort soit différente ou que dans le support longitudinal soit formée une ramification.

8. Support d'essieu conforme à la revendication 3, comprenant au moins une partie d'insertion prévue dans le noyau en treillis (8) et réalisée en un matériau autre que ce noyau en treillis.

9. Support d'essieu conforme à l'une des revendications précédentes, comprenant au moins une pièce locale appliquée sur le profilé en treillis ou inséré dans celui-ci qui assure la fonction de couche d'amortissement.
